# FASCICULE DE BREVET EUROPEEN

(11) **EP 4 241 034 B1**
(45) Date de publication et mention de la délivrance du brevet: **26.03.2025**
(21) Numéro de dépôt: 21787466.8
(22) Date de dépôt: 07.10.2021
(51) Int. Cl.: F28F 3/04, H01M 10/60, F28F 9/02, F28F 3/12, F28D 21/00, F28D 1/03, H01M 10/613, H01M 10/6556, H01M 10/6569

(54) **DISPOSITIF DE RÉGULATION THERMIQUE, NOTAMMENT DE REFROIDISSEMENT POUR VÉHICULE AUTOMOBILE**
EINRICHTUNG ZUR TEMPERATURREGELUNG, INSBESONDERE FÜR EIN KRAFTFAHRZEUG
HEAT REGULATION DEVICE, PARTICULARLY FOR COOLING AN AUTOMOBILE

(30) Priorité: 07.10.2020 FR 2010223
(43) Date de publication de la demande: 13.09.2023
(73) Titulaire: VALEO SYSTEMES THERMIQUES, 78320 Le Mesnil Saint-Denis (FR)
(72) Inventeur: PERRIN, Thibaut, 78322 Le Mesnil-Saint-Denis Cedex (FR); TONDELLI, Stephane, 78322 Le Mesnil-Saint-Denis Cedex (FR); SUN, Jianqi, Jingzhou Shashi, Hubei Province 434007 (CN); LAN, Tian, Jingzhou Shashi, Hubei Province 434007 (CN)
(74) Mandataire: Valeo Systèmes Thermiques
(86) Numéro de dépôt international: PCT/EP2021/077759
(87) Numéro de publication internationale: WO 2022/074144

(56) Documents cités:
- WO-A1-2005/061981
- DE-A1- 102019 118 356
- DE-A1- 102019 130 983
- US-A- 5 111 877
- US-A- 5 751 414
- US-A1- 2007 074 859

## Description

La présente invention concerne un dispositif de régulation thermique, notamment de refroidissement, notamment pour composant électrique susceptible de dégager de la chaleur lors de son fonctionnement, notamment un dispositif de refroidissement d'au moins une batterie ou cellules de batterie de véhicule automobile.

Les batteries de véhicules, en particulier pour véhicules électriques ou véhicules hybrides, doivent autant que possible être maintenues à température souhaitée, raison pour laquelle on utilise des dispositifs dits de refroidissement pour batteries de véhicules. Ces dispositifs de refroidissement comprennent des plaques de refroidissement à travers lesquelles circule un liquide de refroidissement. Les plaques de refroidissement sont installées, autant que possible sans espace, sur le côté extérieur des batteries dans le but de dissiper la chaleur ou bien de chauffer la batterie. On connaît des dispositifs de refroidissement dans lesquels la plaque de refroidissement est composée de deux parties de plaque qui sont normalement fixées directement l'une à l'autre. Ici, la première partie de plaque est de préférence plane, et la seconde partie de plaque est de préférence une feuille de métal emboutie ou déformée qui présente des dépressions en méandres. Lesdites dépressions sont fermées par la partie de plaque plane qui est fixée à la partie de plaque emboutie, de sorte que des conduits de réfrigérant sont formés. Le brevet EP 2 828 922 B1 décrit un tel dispositif. Le document DE 10 2019 118356 A1 décrit un dispositif selon le préambule de la revendication 1.

L'invention vise à améliorer ce type de dispositif.

L'invention propose ainsi un dispositif de régulation thermique, notamment de refroidissement, pour composant électrique susceptible de dégager de la chaleur lors de son fonctionnement, notamment pour un module de stockage d'énergie électrique, ce dispositif comportant une plaque supérieure et une plaque inférieure assemblée avec la plaque supérieure pour former ensemble une pluralité de canaux de circulation pour un fluide caloporteur, notamment un fluide réfrigérant, notamment un fluide choisi parmi les fluides réfrigérants suivants R134a, R1234yf ou R744, dispositif dans lequel au moins certains des canaux débouchent dans au moins une chambre de virage grâce à laquelle le fluide peut accomplir un virage, dispositif dans lequel l'un au moins de la chambre de virage et des canaux comporte un élément de renfort mécanique formé sur une paroi de cette chambre de virage ou de l'un des canaux, cet élément de renfort étant agencé pour améliorer la tenue mécanique de la chambre et/ou du canal contre de potentielles déformations sous l'action d'une pression élevée.

Dans ce type de dispositif, il y a des concentrations de contraintes dans les zones où le fluide doit effectuer des virages, retournements ou ramifications, par exemple non linéaires, notamment dans les zones de distribution, de collecte ou de retournement de l'écoulement du fluide. Pour éviter la déformation dans ces zones, nous avons recours à des formes particulières, de préférence obtenues par emboutissage, que sont le ou les éléments de renfort selon l'invention.

Selon un aspect de l'invention, l'élément de renfort s'étend sur toute la hauteur de la chambre de virage et des canaux.

Selon un aspect de l'invention, la chambre de virage et les canaux présentent chacun une longueur mesurée suivant un sens d'écoulement du fluide, et l'élément de renfort s'étend sur une partie seulement de la longueur respectivement de la chambre de virage ou du canal, notamment moins de la moitié de cette longueur, ou moins d'un quart ou d'un dixième de cette longueur.

Autrement dit, l'élément de renfort est relativement petit par rapport à la chambre de virage ou des canaux dans leur ensemble.

Selon un aspect de l'invention, une pluralité d'éléments de renfort sont prévus le long de la chambre de virage et/ou de l'un des canaux, cette pluralité d'éléments de renfort étant par exemple espacés les uns des autres de manière régulière.

Selon un aspect de l'invention, ces éléments de renfort formés sur la chambre de virage sont tous identiques.

Selon un aspect de l'invention, l'élément de renfort présente un profil arrondi lorsqu'il est observé dans une direction perpendiculaire aux plaques, ce profil arrondi présentant une concavité dirigée vers l'extérieur de la chambre de virage ou du canal associé.

Selon un aspect de l'invention, la concavité présente un rayon de courbure, notamment de valeur inférieure à 5 mm, notamment inférieure à 2 mm.

Selon un aspect de l'invention, deux canaux voisins se raccordent sur la chambre de virage en des sections de raccord de sorte qu'un espace inter-canaux soit présent sur la chambre de virage entre les deux sections de raccord et l'élément de renfort est situé dans cet espace inter-canaux, notamment au milieu de cet espace inter-canaux.

Selon un aspect de l'invention, les éléments de renforts sont disposés, avec un espacement régulier entre eux, le long d'une ligne longeant la chambre de virage.

Selon un aspect de l'invention, la section de passage de la chambre de virage de fluide est augmentée de part et d'autre de chaque élément de renfort.

Selon un aspect de l'invention, deux canaux de fluide voisins se raccordent à la chambre de virage, et l'élément de renfort qui est formé sur une paroi latérale de la chambre de virage, en vis-à-vis de ces deux canaux de fluide, est disposé de sorte à pouvoir placer un cercle imaginaire inscrit adjacent aux deux canaux voisins et à l'élément de renfort en vis-à-vis, ce cercle inscrit ayant un diamètre notamment inférieur à 15 mm.

Selon l'invention, le ou les éléments de renfort sont formés par emboutissage.

De préférence l'élément de renfort est placé dans une zone de jonction d'un canal avec un autre canal ou avec une chambre de virage, cet élément de renfort étant notamment en vis-à-vis de ce canal.

Notamment lorsque u nombre N canaux consécutifs se raccorde à une chambre de virage, il est prévu un nombre M éléments de renfort consécutifs, avec M=N ou M inférieur à N.

Selon un aspect de l'invention, des éléments de renfort sont disposés suivant une ligne droite, notamment à égale distance les uns des autres.

Selon un aspect de l'invention, les éléments de renfort permettent d'avoir des sections de passage de fluide plus grandes tout en assurant une bonne tenue mécanique à la déformation. Cette augmentation de la section de passage du fluide réfrigérant s'accompagne d'une diminution de la perte de charge occasionnée. Le gain de section de passage peut être d'environ +40% par rapport à un design classique, sans élément de renfort.

L'invention permet également une amélioration du coefficient de forme.

Selon un aspect de l'invention, la chambre de virage peut être agencée pour permettre un retournement de l'écoulement de fluide, ou de pour permettre une collecte de fluide en entrée ou en sortie de fluide. Dans ce dernier cas, la chambre de virage peut être appelée chambre de collecte d'entrée ou de sortie de fluide.

L'invention a encore pour objet un système comportant un composant électrique susceptible de dégager de la chaleur lors de son fonctionnement, notamment pour un module de stockage d'énergie électrique, et un dispositif de refroidissement décrit ci-dessus, agencé pour refroidir le composant, ce composant ou batterie étant en contact thermique avec la plaque supérieure du dispositif de refroidissement.

D'autres caractéristiques et avantages de l'invention apparaitront plus clairement à la lecture de la description suivante, donnée à titre d'exemple illustratif et non limitatif, et des dessins annexés parmi lesquels :
- la [Figure 1] illustre, schématiquement et partiellement, un dispositif selon de refroidissement ;
- la [Figure 2] illustre, schématiquement et partiellement, le dispositif de la [Figure 1] selon une vue différente,
- la [Figure 3] illustre, schématiquement et partiellement, un dispositif selon un autre exemple de l'invention, avec des détails sur une partie des plaques.

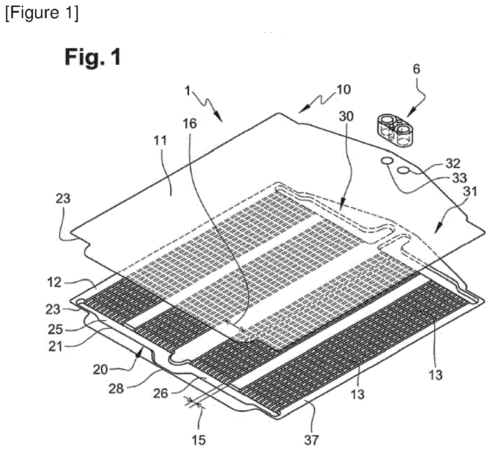

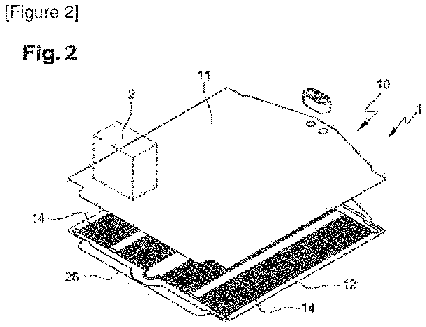

On a représenté sur la [Figure 1] et sur la [Figure 2] un système 1 comportant un ensemble de cellules de batterie 2 à refroidir, par exemple rangées suivant deux rangées ou plus, et un dispositif de refroidissement 10 agencé pour refroidir les cellules 2, qui sont en contact thermique avec une plaque supérieure du dispositif de refroidissement 10, comme expliqué plus bas.

Le dispositif de régulation thermique 10 comporte une plaque supérieure 11, une plaque inférieure 12 assemblée avec la plaque supérieure 11 pour former ensemble une pluralité de canaux 13 de circulation pour un fluide caloporteur, notamment un fluide réfrigérant, notamment un fluide choisi parmi les fluides réfrigérants suivants R134a, R1234yf ou R744. Les canaux 13 sont regroupés par groupes 14 de canaux, les canaux d'un groupe s'étendant sensiblement parallèlement les uns aux autres avec un espacement prédéterminé entre canaux voisins appelé espacement intra-groupe 15. Les canaux 13 présentent chacun une section transversale comprise entre 1 mm2 et 15 mm2, étant par exemple localement d'environ 11 mm2 dans chaque canal. Les canaux 13 s'étendent sensiblement sur toute la longueur des plaques.

Les plaques sont réalisées en aluminium.

Le dispositif de refroidissement comporte une chambre de virage 20 agencée pour conduire le fluide sortant de l'un des groupes 14 de canaux vers l'un des autres groupes de canaux. La chambre de virage 20 est formée par les plaques supérieure 11 et inférieure 12, par exemple en aluminium. La plaque inferieure 12 comporte une zone emboutie 21 agencée pour participer à la formation de la chambre de virage 20. La zone emboutie 21 est fermée avec l'autre des plaques 11 qui est plane pour former la chambre de virage 20. La chambre de virage 20 s'étend sur un côté 23 des plaques.

Le dispositif de refroidissement comporte une zone d'entrée 30 de fluide réfrigérant des canaux, cette zone d'entrée étant formée entre les deux plaques 11 et 12. Cette zone d'entrée 30 de fluide est agencée pour alimenter tous les canaux 13 de circulation de fluide qui débouchent sur la chambre de virage 20, à savoir les canaux dans lesquels le fluide s'écoule vers la chambre de virage. Cette zone d'entrée 30 est commune aux groupes 14 de canaux. Le dispositif de refroidissement comporte une zone de sortie 31 de fluide réfrigérant des canaux, cette zone de sortie étant formée entre les deux plaques 11 et 12. Cette zone de sortie 31 de fluide est agencée pour conduire le fluide sortant de tous les canaux 13 de circulation de fluide qui proviennent de la chambre de virage. Cette zone de sortie 31 est commune aux deux groupes de canaux. Les zones d'entrée 30 et 31 et de sortie sont adjacentes à un orifice d'entrée 32, respectivement de sortie 33. Les orifices d'entrée 32 et de sortie 33 sont reliés à un bloc de raccord 6 de tubulures.

La plaque inférieure 2 comporte des zones 37 de section transversale arrondie, notamment des zones embouties, pour former avec la plaque supérieure les canaux 13. Les zones d'entrée 30 et de sortie 31 comportent des zones embouties de la plaque inferieure 12.

Préférentiellement le fluide caloporteur peut être choisi parmi les fluides réfrigérants d'appellation R134a, R1234yf ou R744.

Les cellules de batterie comprennent par exemple une pluralité de batteries au lithium-ion (Li-ion) pour une utilisation dans un véhicule hybride. Dans un autre mode de réalisation, la pluralité de cellules de batterie sont des batteries Li-ion pour une utilisation dans un véhicule électrique à batterie. La chambre de virage 20 et/ou la zone d'entrée 30 et/ou la zone de sortie 31 comportent, le cas échéant, des éléments de renfort pour renforcer la tenue mécanique dans ces zones qui sont potentiellement de plus forte section.

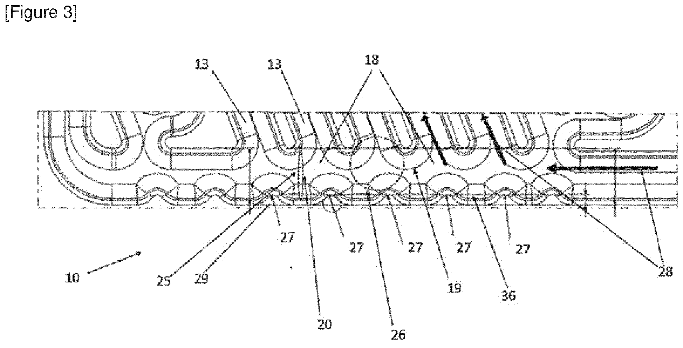

On a représenté sur la [Figure 3] un détail d'un dispositif selon un exemple de réalisation de l'invention, qui reprend la plupart des éléments de l'exemple décrit précédemment.

Il sera ici davantage décrit une chambre de virage et les canaux qui s'y raccordent.

Des canaux 13 débouchent dans une chambre de virage 20 grâce à laquelle le fluide peut accomplir un virage.

Les flèches 28 matérialisent le sens de l'écoulement du fluide dans les canaux 13 et la chambre de virage 20.

La chambre de virage 20 comporte des éléments de renfort mécanique 27 formés sur une paroi de cette chambre de virage 20, chaque élément de renfort 27 étant agencé pour améliorer la tenue mécanique de la chambre contre de potentielles déformations sous l'action d'une pression élevée.

Chaque élément de renfort 27 s'étend sur toute la hauteur de la chambre de virage 20.

La chambre de virage 20 et les canaux 13 présentent chacun une longueur mesurée suivant un sens d'écoulement du fluide, et chaque élément de renfort 27 s'étend sur une partie seulement de la longueur de la chambre de virage 20, ici moins de 1/5 ou 1/8 ou 1/10 de la longueur totale de la chambre de virage 20 associée.

Les éléments de renfort 27 sont prévus le long de la chambre de virage 20, cette pluralité d'éléments de renfort étant espacés les uns des autres de manière régulière.

Ces éléments de renfort 27 formés sur la chambre de virage 20 sont tous identiques, de même forme et de mêmes dimensions.

Des éléments de renfort de dimensions et/ou dimensions différents pourraient, en variante, être prévus.

Chaque élément de renfort 27 présente un profil arrondi lorsqu'il est observé dans une direction perpendiculaire aux plaques, ce profil arrondi présentant une concavité 29 dirigée vers l'extérieur de la chambre de virage 20 associé.

La concavité 29 présente un rayon de courbure, notamment de valeur inférieure à 5 mm, notamment inférieure à 2 mm. Le rayon de courbure est celui du cercle en pointillés sur la figure 3, avec une valeur de 1.1 mm.

Deux canaux voisins 13 se raccordent sur la chambre de virage 20 en des sections de raccord 18 de sorte qu'un espace 19 inter-canaux soit présent sur la chambre de virage 20 entre les deux sections de raccord 18 et l'élément de renfort 27 est situé dans cet espace inter-canaux, ici au milieu de cet espace inter-canaux.

Les éléments de renforts 27 sont disposés, avec un espacement régulier entre eux, le long d'une ligne 36 longeant la chambre de virage 20.

Les éléments de renfort 27 sont formés par emboutissage sur a plaque correspondante.

Les éléments de renfort 27 permettent d'avoir des sections de passage de fluide plus grandes tout en assurant une bonne tenue mécanique à la déformation. Cette augmentation de la section de passage du fluide réfrigérant s'accompagne d'une diminution de la perte de charge occasionnée. Le gain de section de passage peut être d'environ +40% par rapport à un design classique, sans élément de renfort.

Deux canaux de fluide voisins se raccordent à la chambre de virage, et l'élément de renfort 27 qui est formé sur une paroi latérale de la chambre de virage, en vis-à-vis de ces deux canaux de fluide, est disposé de sorte à pouvoir placer un cercle imaginaire 26 inscrit adjacent aux deux canaux voisins et à l'élément de renfort en vis-à-vis, ce cercle inscrit 26 ayant un diamètre inférieur à 15 mm.

On remarquera que la section de passage 25 de la chambre de virage 20 de fluide est augmentée de part et d'autre de chaque élément de renfort 27.

La chambre de virage 20 peut être agencée pour permettre un retournement de l'écoulement de fluide, ou de pour permettre une collecte de fluide en entrée ou en sortie de fluide. Dans ce dernier cas, la chambre de virage peut être appelée chambre de collecte d'entrée ou de sortie de fluide.

Dans une variante, un ou des éléments de renfort 27 peuvent être formés sur l'un au moins des canaux 13, notamment sur une portion non-linéaire de ce canal.

## Revendications

1. Dispositif de régulation thermique (10), notamment de refroidissement, pour composant électrique susceptible de dégager de la chaleur lors de son fonctionnement, notamment pour un module de stockage d'énergie électrique, ce dispositif comportant une plaque supérieure et une plaque inférieure assemblée avec la plaque supérieure pour former ensemble une pluralité de canaux de circulation pour un fluide caloporteur, notamment un fluide réfrigérant, notamment un fluide choisi parmi les fluides réfrigérants suivants R134a, R1234yf ou R744, dispositif dans lequel au moins certains des canaux débouchent dans au moins une chambre de virage grâce à laquelle le fluide peut accomplir un virage (20), dispositif dans lequel l'un au moins de la chambre de virage et des canaux (13) comporte un élément de renfort mécanique (27) formé sur une paroi de cette chambre de virage ou de l'un des canaux, cet élément de renfort (27) étant agencé pour améliorer la tenue mécanique de la chambre et/ou du canal contre de potentielles déformations sous l'action d'une pression élevée, **caractérise en ce que** le ou les éléments de renfort (27) sont formés par emboutissage.

2. Dispositif selon la revendication précédente, **caractérisé en ce que** l'élément de renfort (27) s'étend sur toute la hauteur de la chambre de virage (20) et des canaux.

3. Dispositif selon l'une des revendications précédentes, **caractérisé en ce que** la chambre de virage (20) et les canaux présentent chacun une longueur mesurée suivant un sens d'écoulement (13) du fluide, et l'élément de renfort s'étend sur une partie seulement de la longueur respectivement de la chambre de virage ou du canal, notamment moins de la moitié de cette longueur, ou moins d'un quart ou d'un dixième de cette longueur.

4. Dispositif selon l'une des revendications précédentes, **caractérisé en ce qu'**une pluralité d'éléments de renfort (27) sont prévus le long de la chambre de virage et/ou de l'un des canaux, cette pluralité d'éléments de renfort étant par exemple espacés les uns des autres de manière régulière.

5. Dispositif selon l'une des revendications précédentes, **caractérisé en ce que** l'élément de renfort (27) présente un profil arrondi lorsqu'il est observé dans une direction perpendiculaire aux plaques, ce profil arrondi présentant une concavité (29) dirigée vers l'extérieur de la chambre de virage ou du canal associé.

6. Dispositif selon la revendication précédente, **caractérisé en ce que** la concavité (29) présente un rayon de courbure, notamment de valeur inférieure à 5 mm, notamment inférieure à 2 mm.

7. Dispositif selon l'une des revendications précédentes, **caractérisé en ce que** deux canaux (13) voisins se raccordent sur la chambre de virage en des sections de raccord (19) de sorte qu'un espace inter-canaux soit présent sur la chambre de virage entre les deux sections de raccord et l'élément de renfort est situé dans cet espace inter-canaux, notamment au milieu de cet espace inter-canaux.

8. Dispositif selon l'une des revendications précédentes, **caractérisé en ce qu'**une section de passage (25) de la chambre de virage (20) de fluide est augmentée de part et d'autre de chaque élément de renfort (27).

9. Dispositif selon l'une des revendications précédentes, **caractérisé en ce que** deux canaux de fluide voisins se raccordent à la chambre de virage, et l'élément de renfort (27) qui est formé sur une paroi latérale de la chambre de virage, en vis-à-vis de ces deux canaux de fluide, est disposé de sorte à pouvoir placer un cercle imaginaire (26) inscrit adjacent aux deux canaux voisins et à l'élément de renfort en vis-à-vis, ce cercle inscrit (26) ayant un diamètre notamment inférieur à 15 mm.

10. Dispositif selon l'une des revendications précédentes, **caractérisé en ce que** la chambre de virage est agencée pour permettre un retournement de l'écoulement de fluide, ou de pour permettre une collecte de fluide en entrée ou en sortie de fluide.

11. Système comportant un composant électrique susceptible de dégager de la chaleur lors de son fonctionnement, notamment pour un module de stockage d'énergie électrique, et un dispositif de refroidissement selon l'une des revendications précédentes, agencé pour refroidir le composant, ce composant ou batterie étant en contact thermique avec la plaque supérieure du dispositif de refroidissement.

## Patentansprüche

1. Einrichtung zur Temperaturregelung (10), insbesondere zur Kühlung, für eine elektrische Komponente, die während ihres Betriebs Wärme abgeben kann, insbesondere für ein Modul zur Speicherung elektrischer Energie, wobei diese Einrichtung eine obere Platte und eine untere Platte, die mit der oberen Platte zusammengefügt ist, beinhaltet, um zusammen eine Vielzahl von Umlaufkanälen für ein Wärmeträgerfluid, insbesondere ein Kältemittel, insbesondere ein Fluid, das aus den folgenden Kältemitteln R134a, R1234yf oder R744 ausgewählt ist, zu bilden, wobei in der Einrichtung mindestens einige der Kanäle in mindestens einer Umkehrkammer münden, dank derer das Fluid eine Umkehr (20) ausführen kann, wobei in der Einrichtung mindestens eines von der Umkehrkammer und den Kanälen (13) ein mechanisches Verstärkungselement (27) umfasst, das an einer Wand dieser Umkehrkammer oder eines der Kanäle gebildet ist, wobei dieses Verstärkungselement (27) dazu eingerichtet ist, die mechanische Festigkeit der Kammer und/oder des Kanals gegenüber potenziellen Verformungen unter der Einwirkung eines erhöhten Drucks zu verbessern, **dadurch gekennzeichnet, dass** das eine oder die mehreren Verstärkungselemente (27) durch Tiefziehen gebildet sind.

2. Einrichtung nach dem vorhergehenden Anspruch, **dadurch gekennzeichnet, dass** sich das Verstärkungselement (27) über die gesamte Höhe der Umkehrkammer (20) und der Kanäle erstreckt.

3. Einrichtung nach einem der vorhergehenden Ansprüche, **dadurch gekennzeichnet, dass** die Umkehrkammer (20) und die Kanäle jeweils eine gemäß einer Strömungsrichtung (13) des Fluids gemessene Länge aufweisen und sich das Verstärkungselement nur über einen Teil der Länge der Umkehrkammer bzw. des Kanals, insbesondere weniger als die Hälfte dieser Länge oder weniger als ein Viertel oder ein Zehntel dieser Länge, erstreckt.

4. Einrichtung nach einem der vorhergehenden Ansprüche, **dadurch gekennzeichnet, dass** entlang der Umkehrkammer und/oder eines der Kanäle eine Vielzahl von Verstärkungselementen (27) vorgesehen sind, wobei diese Vielzahl von Verstärkungselementen beispielsweise regelmäßig voneinander beabstandet sind.

5. Einrichtung nach einem der vorhergehenden Ansprüche, **dadurch gekennzeichnet, dass** das Verstärkungselement (27) ein gerundetes Profil aufweist, wenn es in einer zu den Platten senkrechten Richtung betrachtet wird, wobei dieses gerundete Profil eine zur Außenseite der Umkehrkammer oder des assoziierten Kanals gerichtete Konkavität (29) aufweist.

6. Einrichtung nach dem vorhergehenden Anspruch, **dadurch gekennzeichnet, dass** die Konkavität (29) einen Krümmungsradius mit insbesondere einem Wert kleiner als 5 mm, insbesondere kleiner als 2 mm, aufweist.

7. Einrichtung nach einem der vorhergehenden Ansprüche, **dadurch gekennzeichnet, dass** zwei benachbarte Kanäle (13) in Anschlussbereichen (19) an die Umkehrkammer angeschlossen sind, sodass in der Umkehrkammer zwischen den zwei Anschlussbereichen ein Kanalzwischenraum existiert, und sich das Verstärkungselement in diesem Kanalzwischenraum, insbesondere in der Mitte dieses Kanalzwischenraums, befindet.

8. Einrichtung nach einem der vorhergehenden Ansprüche, **dadurch gekennzeichnet, dass** ein Durchgangsquerschnitt (25) der Fluidumkehrkammer (20) auf beiden Seiten jedes Verstärkungselements (27) vergrößert ist.

9. Einrichtung nach einem der vorhergehenden Ansprüche, **dadurch gekennzeichnet, dass** zwei benachbarte Fluidkanäle an die Umkehrkammer angeschlossen sind und das Verstärkungselement (27), das an einer Seitenwand der Umkehrkammer gegenüber diesen zwei Fluidkanälen gebildet ist, so angeordnet ist, dass ein imaginärer Kreis (26) gezogen werden kann, der an die zwei benachbarten Kanäle und an das gegenüberliegende Verstärkungselement angrenzend eingeschrieben ist, wobei dieser eingeschriebene Kreis (26) einen Durchmesser insbesondere kleiner als 15 mm aufweist.

10. Einrichtung nach einem der vorhergehenden Ansprüche, **dadurch gekennzeichnet, dass** die Umkehrkammer dazu eingerichtet ist, eine Umkehrung der Fluidströmung zu gestatten oder das Sammeln von Fluid am Fluideinlass oder -auslass zu gestatten.

11. System, umfassend eine elektrische Komponente, die während ihres Betriebs Wärme abgeben kann, insbesondere für ein Modul zur Speicherung elektrischer Energie, und eine Kühleinrichtung nach einem der vorhergehenden Ansprüche, die dazu eingerichtet ist, die Komponente zu kühlen, wobei diese Komponente oder Batterie mit der oberen Platte der Kühleinrichtung in thermischem Kontakt steht.

## Claims

1. Temperature regulation device (10), notably a cooling device, for an electrical component liable to give off heat during operation, notably for an electrical energy storage module, this device having an upper plate and a lower plate joined to the upper plate such that the plates together form a plurality of circulation channels for a heat transfer fluid, notably a refrigerant fluid, notably a fluid selected from the following refrigerant fluids R134a, R1234yf and R744, in which device at least some of the channels lead into at least one diverting chamber, by virtue of which the fluid can make a diversion (20), in which device at least one of the diverting chamber and the channels (13) has a mechanical reinforcing element (27) formed on a wall of this diverting chamber or of one of the channels, this reinforcing element (27) being designed to improve the mechanical resistance of the chamber and/or of the channel to potential deformations under the action of high pressure, **characterized in that** the one or more reinforcing elements (27) are formed by stamping.

2. Device according to the preceding claim, **characterized in that** the reinforcing element (27) extends over the entire height of the diverting chamber (20) and of the channels.

3. Device according to either of the preceding claims, **characterized in that** the diverting chamber (20) and the channels each have a length measured in a direction of flow (13) of the fluid, and the reinforcing element extends only over part of the length of the diverting chamber and the channel, respectively, notably less than half of this length, or less than one quarter or one tenth of this length.

4. Device according to one of the preceding claims, **characterized in that** a plurality of reinforcing elements (27) are provided along the diverting chamber and/or one of the channels, this plurality of reinforcing elements being, for example, evenly spaced apart from one another.

5. Device according to one of the preceding claims, **characterized in that** the reinforcing element (27) has a rounded profile when viewed in a direction perpendicular to the plates, this rounded profile having a concavity (29) directed towards the outside of the diverting chamber or of the associated channel.

6. Device according to the preceding claim, **characterized in that** the concavity (29) has a radius of curvature, notably with a value less than 5 mm, notably less than 2 mm.

7. Device according to one of the preceding claims, **characterized in that** two neighbouring channels (13) are connected to the diverting chamber in connecting sections (19) such that a gap between channels is present in the diverting chamber between the two connecting sections and the reinforcing element is located in this gap between channels, notably in the middle of this gap between channels.

8. Device according to one of the preceding claims, **characterized in that** a fluid passage cross section (25) of the diverting chamber (20) is increased on either side of each reinforcing element (27).

9. Device according to one of the preceding claims, **characterized in that** two neighbouring fluid channels are connected to the diverting chamber, and the reinforcing element (27) formed on a lateral wall of the diverting chamber, facing these two fluid channels, is disposed so as to be able to position an inscribed imaginary circle (26) adjacent to the two neighbouring channels and the reinforcing element facing them, this inscribed circle (26) having a diameter notably less than 15 mm.

10. Device according to one of the preceding claims, **characterized in that** the diverting chamber is designed to make it possible to reverse the flow of fluid, or to make it possible to collect fluid at the fluid inlet or outlet.

11. System having an electrical component liable to give off heat during operation, notably for an electrical energy storage module, and a cooling device as claimed in one of the preceding claims that is designed to cool the component, this component or battery being in thermal contact with the upper plate of the cooling device.
